# EUROPEAN PATENT SPECIFICATION

(11) **EP 4 059 810 B1**
(45) Date of publication and mention of the grant of the patent: **21.08.2024**
(21) Application number: 22162948.8
(22) Date of filing: 18.03.2022
(51) Int. Cl.: B62B 1/20, B62B 5/06

(54) **DEVICE FOR MOVING A WHEELBARROW**
VORRICHTUNG ZUM BEWEGEN EINER SCHUBKARRE
DISPOSITIF DE DÉPLACEMENT D'UN BROUETTE

(30) Priority: 18.03.2021 IT 202100006530
(43) Date of publication of application: 21.09.2022
(73) Proprietor: Cecchini, Alberto, 36061 Bassano del Grappa (VI) (IT)
(72) Inventor: Cecchini, Alberto, 36061 Bassano del Grappa (VI) (IT)
(74) Representative: Gallo, Luca

(56) References cited:
- GB-A- 244 687
- JP-A- S5 244 932
- US-A1- 2004 025 623
- US-A1- 2015 021 368
- US-B1- 7 934 727

## Description

### Field of application

The present invention regards a device for moving a wheelbarrow according to the preamble of the independent claim 1.

The present device is advantageously intended to be employed for facilitating the movement of a wheelbarrow, in particular when the latter has a great load, and has particular use for application in building work sites or in farming.

The present device is therefore inserted in the industrial field of production of work site articles, in particular in the field of production of wheelbarrows and accessories for the same.

### State of the art

Wheelbarrows are used for transporting heavy material, in particular for allowing a user to transport a greater quantity of material in less time with respect to hand transport. Wheelbarrows can be used in different fields, but usually they are employed in building work sites, for transporting materials form work sites, and in agriculture, for transporting earth and/or gravel.

The wheelbarrows of known type usually comprise a support frame, to which at least one wheel is rotatably connected, and a containment tank, fixed to the support frame and adapted to contain the material to be transported.

The support frame usually comprises two handles, which are extended away from the containment tank, in opposite direction with respect to the wheel, and they are grippable by a user in order to allow lifting the wheelbarrow and the movement thereof.

Such action of lifting and moving the wheelbarrow requires the user to exert a high force, in particular in case of fully-loaded wheelbarrows.

The tension required by the user for lifting and moving the wheelbarrow is usually unloaded on the arms and on the back of the user, often causing fatigue and sometimes injuries during the wheelbarrow movement operations. In order to at least partly resolve such problem, devices have been developed for facilitating the movement of the wheelbarrow, in particular at full load.

Known for example are the devices described in patents GB 244687 and US 2015/0021368, which comprise an elastic band provided at the opposite ends thereof with two tubular sleeves, which can be fit on the handles of the wheelbarrow in order to fix the elastic band to the handles of the wheelbarrow.

Also known from the patent JP S5244932 is a device for moving a carriage, which comprises an elastic band wearable around the neck of a user and provided at the opposite ends thereof with U-shaped coupling elements adapted to engage corresponding seats made on the frame of the carriage.

A further example of a device for moving a wheelbarrow is described in the patent US 2004/025623, which comprises two tubular sleeves, fittable on the handles of the wheelbarrow and fixable to the latter by means of lateral screws.

In particular, the device described in the aforesaid patent comprises two additional handles, which are fixed to the internal sides of the tubular sleeves and have a curved profile, which is extended for a first section substantially parallel to the handles of the wheelbarrow, and for a second section orthogonal to the first section.

The device described herein also comprises an elastic band, which is fixed to the additional handles by means of screws and bolts, and is arranged for receiving the pelvis of a user in abutment, in order to facilitate the movement of the wheelbarrow, reducing the force that the arms and back must sustain.

Such device for moving a wheelbarrow has in practice shown that it does not lack drawbacks. The main drawback lies in the fact that such device has proven complicated in the mounting thereof and has also proven unsuitable for being applied to different types of wheelbarrows.

Indeed, such device provides for perforating the handle of the wheelbarrow and fixing the tubular sleeve to the handle itself by means of one or more screws, which renders the fixing step long and complicated, in particular in the event in which the device must be mounted on a new wheelbarrow.

A further drawback lies in the fact that the device of known type does not allow an easy mounting and dismounting of the elastic band on/from the tubular sleeves.

Also in this case, it is in fact necessary to perforate the sleeves in order to fix the elastic band by means of screws. Therefore, the dismounting of the elastic band from the tubular sleeves is inconvenient and complicated, since it provides for removing the screws and the relative bolts.

A further drawback lies in the fact that such devices provide that, following the removal of the elastic band, the additional handles remain mounted on the handles of the wheelbarrow, determining a greater bulk than the original handles and also being dangerous for the final user since arranged perpendicular with respect to the handles of the wheelbarrow.

Therefore, the moving device of known type has proven unsuitable for being easily mounted and dismounted, in particular by means of only the removal of the elastic band, in order to allow a quick passage between a classic configuration, and an auxiliary configuration, in which the wheelbarrow can also be thrust by a user by means of the pelvis.

In order to at least partly resolve such drawback, a device for moving a wheelbarrow was developed, described in the patent US 7934727, which comprises two grips fittable on respective handles of the wheelbarrow and each provided with an internally hollow tubular sleeve that must be orthogonally extended with respect to the handles of the wheelbarrows and internally defines a cylindrical housing seat.

More in detail, the device described in the patent US 7934727 comprises a transverse thrust element, provided with a thrust portion and two tubular coupling portions, each of which inserted within the cylindrical housing seat of the tubular sleeve and fixed to the latter by means of corresponding retention pins.

Nevertheless, also such device for moving a wheelbarrow has in practice proven that it does not lack drawbacks.

The main drawback lies in the fact that also such moving device of known type has proven complicated in its assembly and fixing to the wheelbarrow, since it requires that the thrust element be housed in the cylindrical seat and stopped in position by means of suitable pins.

A further drawback lies in the fact that such device is extremely difficult/costly to produce, comprising numerous components for the attainment thereof.

A further drawback lies in the fact that such device is not very comfortable during the use thereof, requiring the user to grip the grips of the device with the arms astride the transverse thrust element.

A further drawback lies in the fact that such device is extremely bulky and hard to use in situations where high movement agility is required, and resulting extremely heavy and hence poorly adapted for reducing the overall load that the user must lift.

### Presentation of the invention

In this situation, the problem underlying the present invention is therefore that of overcoming the drawbacks manifested by the abovementioned solutions of known type, by providing a device for moving a wheelbarrow which is simple and easy to assemble, as defined in claim 1.

A further object of the present invention is to provide a device for moving a wheelbarrow which is adaptable without modifications to multiple wheelbarrow types. A further object of the present invention is to provide a device for moving a wheelbarrow which has reduced bulk in order to not obstruct the movement of the wheelbarrow.

A further object of the present invention is to provide a device for moving a wheelbarrow which is safe to use.

A further object of the present invention is to provide a device for moving a wheelbarrow which is entirely reliable in operation.

A further object of the present invention is to provide a device for moving a wheelbarrow which is simple and inexpensive to attain.

### Brief description of the drawings

The technical characteristics of the invention, according to the aforesaid objects, can be clearly seen in the contents of the below-reported claims and the advantages of the same will be more evident in the following detailed description, made with reference to the enclosed drawings, which represent several merely exemplifying and non-limiting embodiments of the invention, in which:

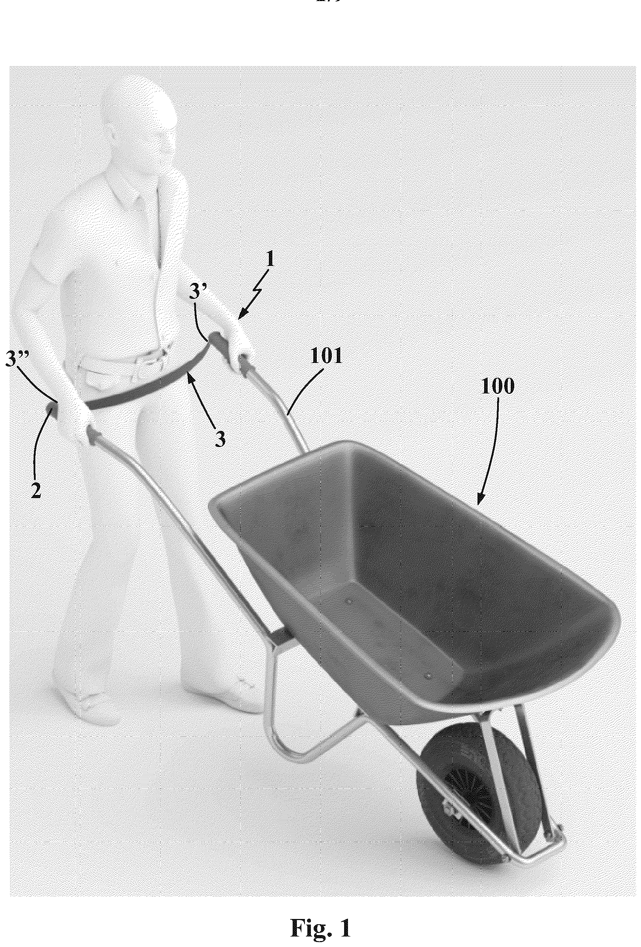

- figure 1 shows front perspective view of a device for moving a wheelbarrow, mounted on a wheelbarrow and in which also a user is represented during an action of lifting and moving the wheelbarrow;

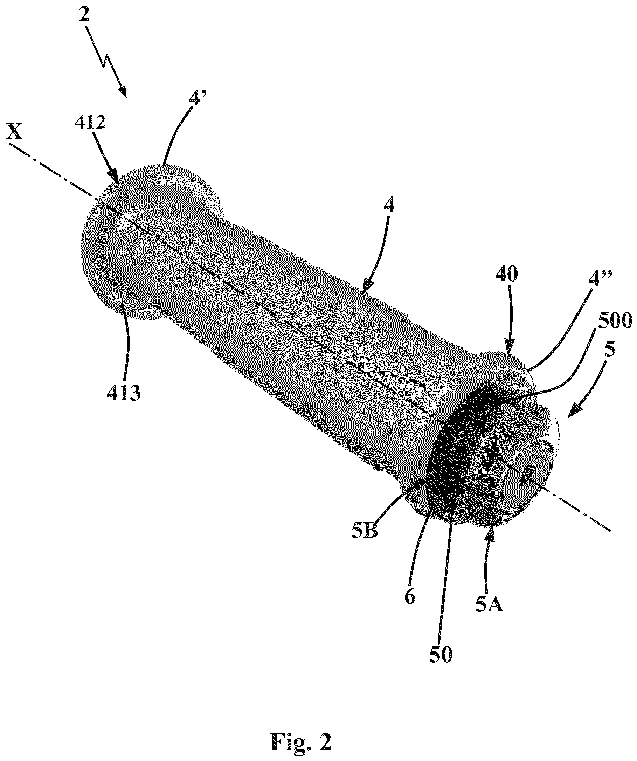

- figure 2 shows front perspective view of a grip of the device of figure 1, in accordance with a first embodiment;
- figure 3 shows a side section view of the grip of the device mounted on a handle of the wheelbarrow, in accordance with a second embodiment;
- figure 4 shows a side section view of the grip of the device mounted on a handle of the wheelbarrow, in accordance with a third embodiment;
- figure 5 shows a side section view of the grip of figure 2, mounted on a handle of the wheelbarrow;
- figure 6A shows a side section view of the grip of the device mounted on a handle of the wheelbarrow, in accordance with a fourth embodiment;
- figure 6B shows a side section view of a detail of the grip of figure 6A, relative to a head portion and a fixing portion;
- figure 7 shows a side section view of the grip of the device mounted on a handle of the wheelbarrow, in accordance with a fifth embodiment;
- figure 8 shows a side section view of the grip of the device mounted on a handle of the wheelbarrow, in accordance with a sixth embodiment;
- figure 9 shows a side section view of the grip of the device mounted on a handle of the wheelbarrow, in accordance with a seventh embodiment;
- figure 10 shows a side section view of the grip of the device mounted on a handle of the wheelbarrow in accordance with an eighth embodiment;
- figure 11A shows a top plan view of an annular body of the grip of figure 10;
- figure 11B shows a top plan view of the annular body of the grip of figure 11A, with a retention element inserted.
- figure 12A shows a side section view of an embodiment variant of the fourth embodiment of figure 6A of the device;
- figure 12B shows an exploded view of the device of figure 12A, with several parts removed in order to better illustrate other parts;
- figure 13 shows a side section view of an embodiment variant of the sixth embodiment of figure 8 of the device;
- figure 14A shows a side view of a further embodiment of the present device;
- figure 14B shows an exploded view of several components of the device of figure 14A.

### Detailed description of a preferred embodiment

With reference to the enclosed drawings, reference number 1 overall indicates the device for moving a wheelbarrow, object of the present invention.

The device 1 according to the present invention is intended to be employed on a wheelbarrow in order to facilitate the movement thereof and to reduce the force carried out by the user, and in particular in order to reduce the load supported by the arms and by the back.

In particular, the present device 1 is employable for transforming a wheelbarrow between a classic configuration, in which it is movable only by the thrust of the arms of a user, and a "facilitated" configuration, in which the user pushes the wheelbarrow also by means of the pelvis, reducing the load on the arms and on the back and thus facilitating the movement. The device according to the invention is employable for moving a wheelbarrow provided with two handles 101 grippable by the hands of a user. In accordance with the invention, the device 1 comprises two grips 2, each of which mechanically connectable to a respective handle 101 of the wheelbarrow 100 and provided with a tubular sleeve 4, grippable by a user and intended to be fit on a corresponding handle 101 of the wheelbarrow 100. Each tubular sleeve 4 is extended along a first extension direction X, between a first open end 4', susceptible of being fit on the handle 101 of the wheelbarrow 100, and a second free end 4", opposite the first end 4'.

The device 1 also comprises a transverse thrust element 3, which is extended between a first end 3' mechanically connected to one of the two grips 2, and a second end 3" mechanically connected to the other grip 2. The device 1 also comprises coupling means 5 for coupling the ends 3', 3" of the transverse thrust element 3 to the respective grips 2.

In accordance with the idea underlying the present invention, the coupling means 5 comprise a first coupling body 5A and a second coupling body 5B, which are extended radially with respect to the first extension direction X, are spaced along the latter and between them delimit an annular seat 6, preferably concave, in which the corresponding end 3', 3" of the transverse thrust element 3 is coupled.

In this manner, it is possible to obtain a device 1 for moving a wheelbarrow 100, which allows reducing the load supported by the arms and by the back of the user, and which is at the same time easy to dismount and mount from/on the wheelbarrow 100.

In addition, in such a manner, it is possible to transform the wheelbarrow 100 in a brief time from a "classic" configuration in which the user grips the tubular sleeves 4, in order to lift and move it in a conventional manner and in which there are no further projecting elements that could be dangerous or bulky for the user, to a "facilitated" configuration in which the transverse thrust element 3 is mounted on the tubular sleeves 4 in order to facilitate the movement of the wheelbarrow 100, for example by exerting a thrust also with the pelvis.

Advantageously, the first and the second coupling body 5A, 5B are positioned at the free end 4" of the tubular sleeve 4, and preferably define an end portion of the grip 2, intended to be directed towards the user.

Advantageously, the first and the second coupling body 5A, 5B are mechanically connected to each other and, in particular, are rigidly connected to each other, such that they cannot be mutually moved close to or away from each other, maintaining the aforesaid annular seat 6 with fixed width defined between them.

In particular, the first and the second coupling body 5A, 5B can be directly or indirectly connected to each other (e.g. with interposition of the tubular sleeve 4).

Hereinbelow, with the expression "transverse thrust element", reference will be made to an element that is removably connectable transversely between the two grips 2, in a manner so as to substantially define a handle which is extended between two separate grippable portions of the wheelbarrow. The transverse thrust element 3 can for such purpose be a flexible element, such as a belt, an elastic band or an elastic cord, or a rigid element, such as for example a metallic tube or any other rigid element suitable for such purpose.

In accordance with the preferred embodiment illustrated in the enclosed figures, the transverse thrust element 3 is a flexible belt and comprises at its ends 3', 3" two annular elements that are removably engaged in the respective annular seats 6, as is better described hereinbelow.

Advantageously, the annular seat 6 is perimetrically provided with a circumferential opening 60 which is directed radially outward with respect to the first extension direction X of the tubular sleeve 4, in particular in a manner such to allow the insertion of the corresponding end 3', 3" of the transverse thrust element 3 in the annular seat 6 or its removal from the latter, therefore allowing a removable coupling of the transverse thrust element 3 itself.

Advantageously, the coupling means 5 comprise a connection portion 50, which is extended along the first extension direction X from the first coupling body 5A to the second coupling body 5B and defines a bottom surface 500 of the annular seat 6.

More in detail, the first coupling body 5A and the second coupling body 5B are extended radially projecting with respect to the narrow connection portion 50, which, therefore, has narrow width with respect to the two coupling bodies 5A, 5B.

In particular, each said each end 3', 3" of the transverse thrust element 3 is at least partially wound around the connection portion 50 of the coupling means 5 of the corresponding grip 2 and preferably in contact with the bottom surface 500 of the annular seat 6.

Advantageously, the tubular sleeve 4 comprises a first tubular body 41, which is made of polymer material, preferably PVC, and comprises an external surface 410 which at least partly defines a grip portion.

Advantageously, the tubular sleeve 4 comprises an internal surface 411, which is susceptible of being placed in abutment against a grip surface of a corresponding handle 101 of the wheelbarrow 100, in a manner such that the tubular sleeve 4 is retained on the corresponding handle 101 of the wheelbarrow 100 at least via friction.

The first tubular body 41 can be made of a substantially rigid polymer material, in order to confer greater rigidity to the tubular sleeve 4, or it can be made of a substantially flexible polymer material, in order to confer greater comfort to the user during the gripping.

The tubular sleeve 4 preferably also comprises a second tubular body 42, which is extended between a front end 42' and a rear end 42", and is placed to at least partially enclose the first tubular body 41, at least at its grip portion.

The second tubular body 42 is advantageously made of rubber, in order to improve the comfort and the grip of the user during gripping.

Preferably, the first tubular body 41 is made of rigid PVC, and the second tubular body 42 is fit on the first tubular body 41 and is made of rubber.

Advantageously, the first tubular body 41 is extended along the first extension direction X, and is provided with a first annular flange 412, at the first open end 4' of the tubular sleeve 4, and such annular flange 412 is extended radially around the first extension direction X.

The annular flange 412 comprises a first stop wall 413, on which the grip of the user is susceptible of being stopped during the movement of the wheelbarrow. Advantageously, the first stop wall 413 is arranged for receiving in abutment the rear end 42" of the second tubular body 42, preventing the latter from being removed from the first tubular body 41.

The tubular sleeve 4 is advantageously provided with an annular shoulder 40, placed substantially at the second free end 4" thereof.

Advantageously, the annular shoulder 40 of the tubular sleeve 4 defines (and in particular constitutes) the first coupling body 5A of the coupling means 5.

Preferably, the annular shoulder 40 is made on the first tubular body 41 and comprises a second stop wall 400, which is advantageously arranged for receiving in abutment the front end 42' of the second tubular body 42, preventing the latter from being removed from the first tubular body 41.

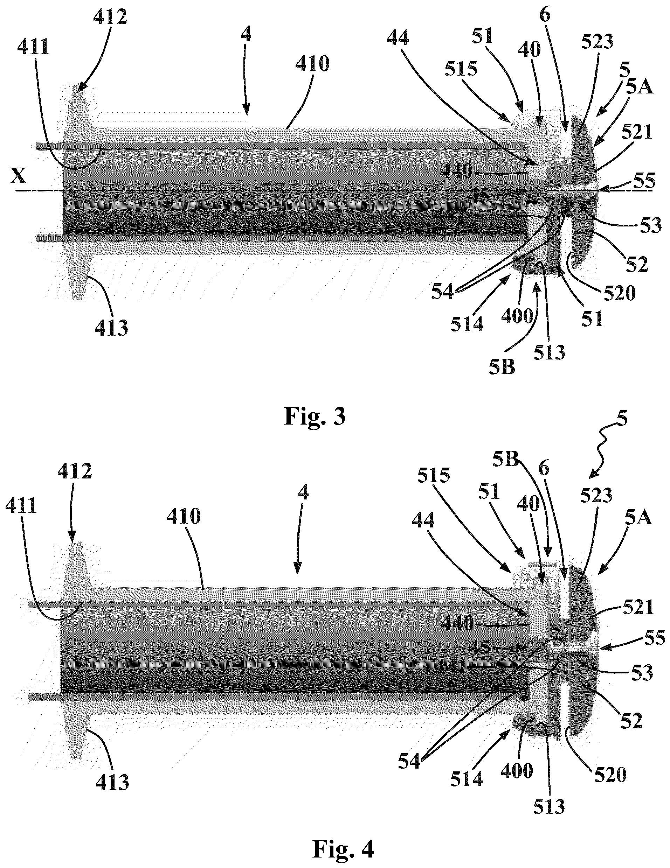

In accordance with the embodiments, illustrated in figures 3 to 7, the coupling means 5 comprise at least one fixing portion 51, mechanically connected to the tubular sleeve 4, and a head portion 52, fixed to the fixing portion 51.

In accordance with the embodiments illustrated in figures 3 and 4, the head portion 52 comprises the first coupling body 5A, while the fixing portion 51 comprises the second coupling body 5B.

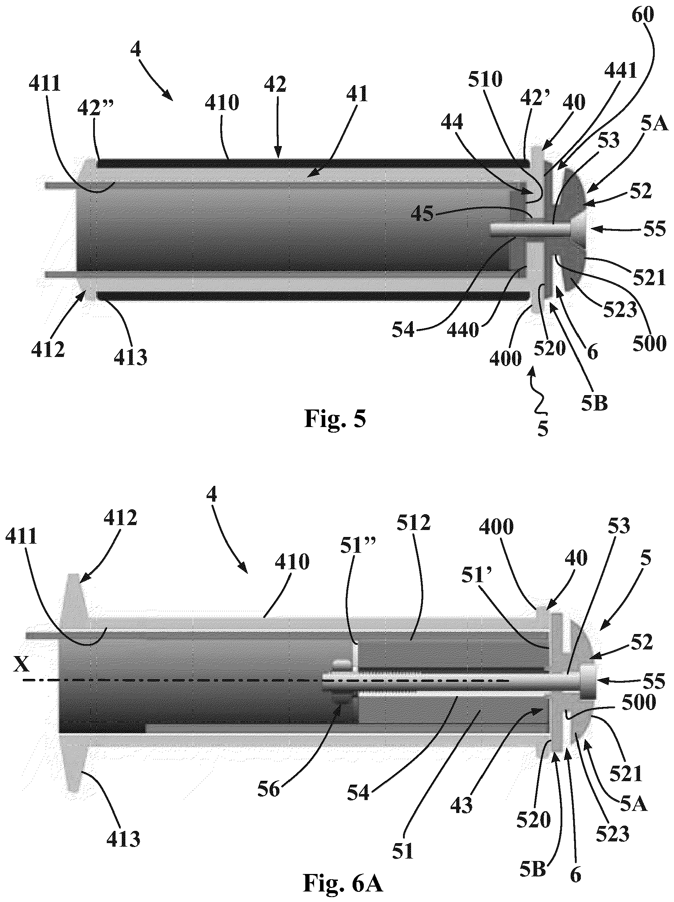

Otherwise, in accordance with the embodiments illustrated in figures 5-7, the head portion 52 comprises both the first coupling body 5A and the second coupling body 5B, and preferably the connection portion 50.

More in detail, in accordance with such embodiments of figures 5-7, the head portion 52 has substantially hemispherical shape and comprises a first wall 520, preferably circular, directed towards the second free end 4" of the tubular sleeve 4, a second wall 521, opposite the first wall 520, and a first lateral surface 523, which connects the first and the second wall 520, 521 of the head portion 52. Advantageously, on the first lateral surface 523 of the head portion 52, a groove is made, preferably along the entire first lateral surface 523, and such groove defines the annular seat 6. Alternatively, the head portion 52 can comprise multiple separate components that are connected together, which delimit the annular seat 6 between them.

Advantageously, in accordance with the embodiments of figures 3-5 and 7, the fixing portion 51 is directly connected to the tubular sleeve 4.

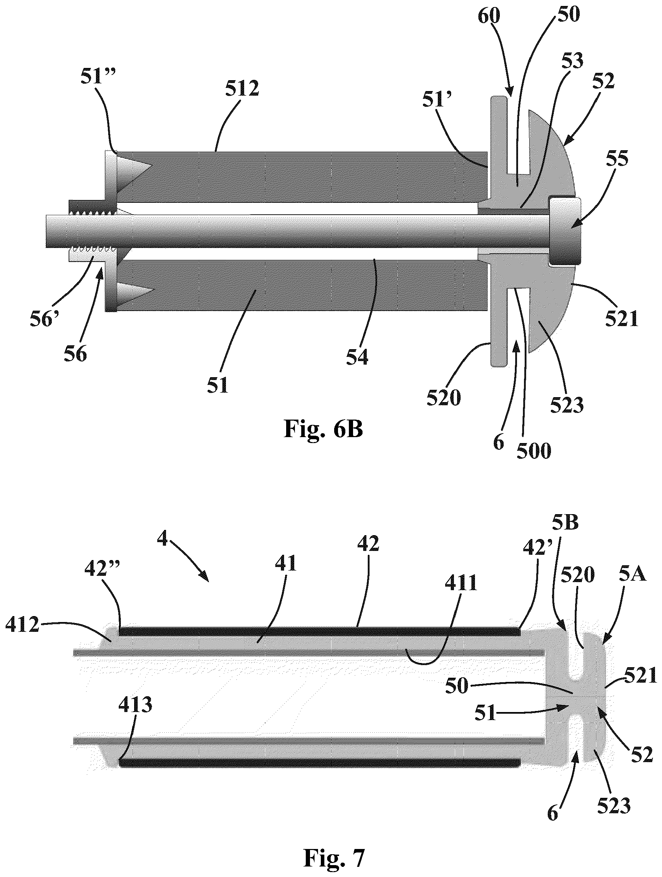

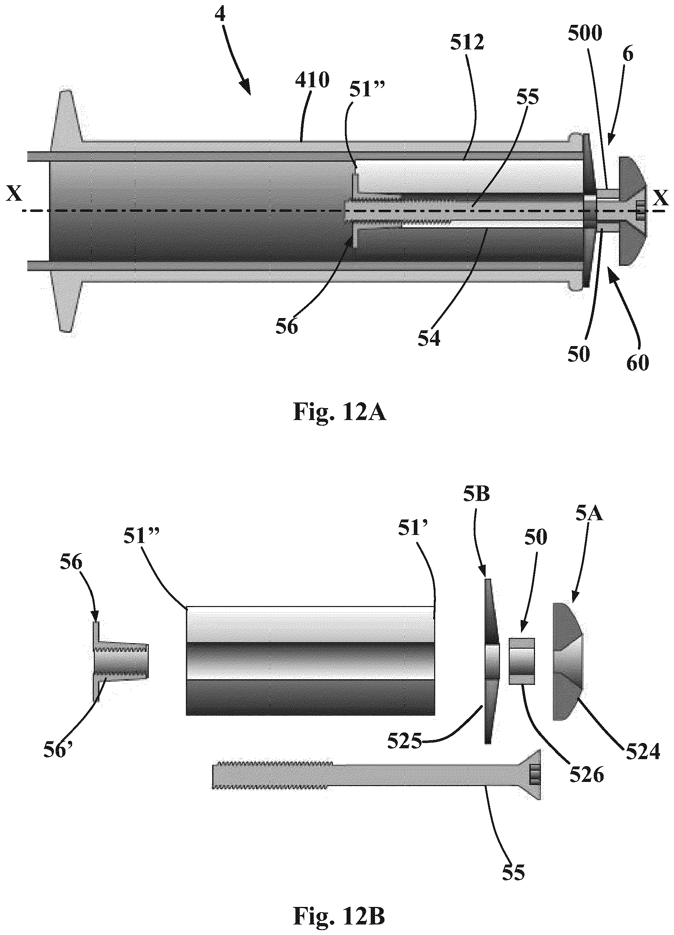

Otherwise, in accordance for example with the fourth embodiment illustrated in figure 6A, 6B or with an embodiment variant thereof illustrated in figure 12, the fixing portion 51 is indirectly connected to the tubular sleeve 4, for example being connected to the handle 101 of the wheelbarrow 100, which will therefore be interposed between the fixing portion 51 and the tubular sleeve 4.

Advantageously, in accordance with the embodiments of figures 6A, 6B and 12, the tubular sleeve 4 is provided with a through hole 43 at the second free end 4" thereof, and such through hole 43 is extended preferably along the entire diameter of the tubular sleeve 4.

Advantageously, with reference to the embodiments of figures 3-6 and 12, the coupling means 5 comprise a first through opening 53 and a second through opening 54, substantially aligned with the first through opening 53.

Preferably, the first and the second through opening 53, 54 are extended along the first extension direction X.

Advantageously, in accordance with the embodiments illustrated in figures 3 to 6B, the first through opening 53 is made on the head portion 52 of the coupling means 5 and the second through opening 54 is made on the fixing portion 51 of the coupling means 5.

Otherwise, it is possible to provide that the first and the second through opening 53, 54 are both made on the head portion 52 of the coupling means 5.

Advantageously, the coupling means 5 comprising at least one first retention element 55, preferably a screw, placed to traverse the first and of the second through opening 53, 54 in order to fix the head portion 52 to the fixing portion 51.

Preferably, the second through opening 54 is a threaded hole arranged for retaining the first retention element 55 via screwing and allowing the fixing of the head portion 52 and of the fixing portion 51 of the coupling means 5.

Otherwise, in accordance with the fourth embodiment illustrated in figure 6A and 6B, the second through opening 54 is not threaded and the coupling means 5 comprise a second retention element 56, preferably a bolt or a threaded washer, which is placed in abutment against the fixing portion 51 of the coupling means 5, for retaining the first retention element 55 via screwing.

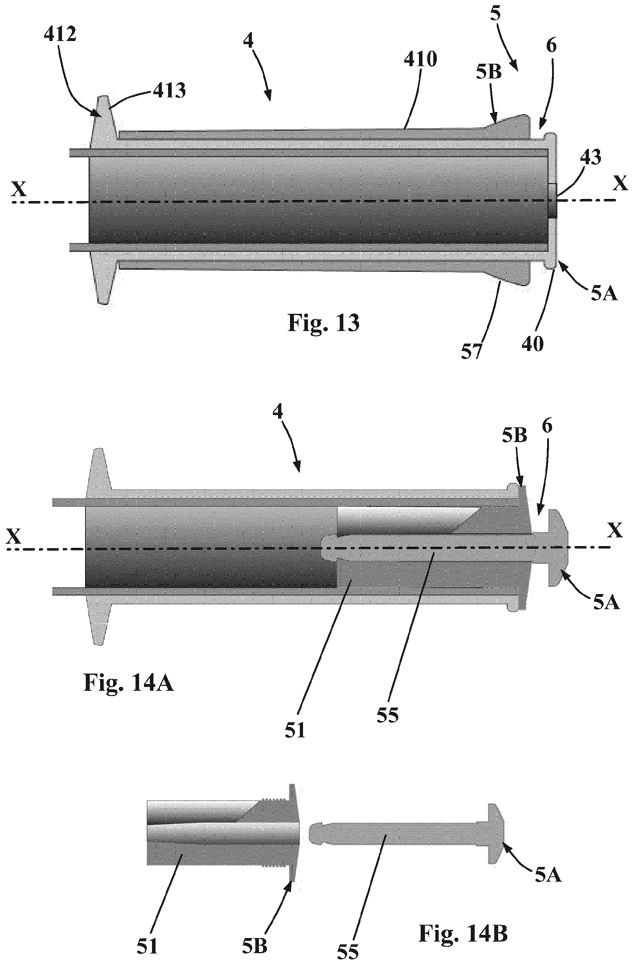

In accordance with a further different embodiment, illustrated in figures 14A and 14B, the coupling means 5 are in expansion block form. In particular, according to the latter embodiment, the fixing portion 51 comprises a hollow cylinder (e.g. made of plastic or metal) intended to be inserted in the handle 101 of the wheelbarrow 100, and the first retention element 55 comprises a rod-like body (e.g. smooth or threaded) which is inserted in the hollow cylinder, radially expanding it in a manner such to constrain it to the internal surface of the handle 101.

Advantageously, in accordance with the example of figure 12, the first coupling body 5A of the head portion 52 is formed by a perforated button 524, the second coupling body 5B is formed by a perforated plate 525 and the connection portion 50 is formed by a bushing 526; in such components, the aforesaid first through opening 53 is made, in a manner such that the first retention element 55 inserted in the latter pack-tightens the perforated button 524, the bushing 526 and the perforated plate 525 retained at the fixing portion 51.

In accordance with the embodiments illustrated in figures from 3 to 5 and 9, the tubular sleeve 4 comprises a closure wall 44, which is extended between an internal face 440, directed towards an internal portion of the tubular sleeve 4, and an external face 441, directed towards the exterior of the tubular sleeve 4 and opposite the internal face 440.

Preferably, the closure wall 44 is made at the second free end 4" of the tubular sleeve 4 and is susceptible of being placed to at least partially close the internal portion defined by the tubular sleeve 4 and by the handle 101 of the wheelbarrow 100.

The closure wall 44 is advantageously provided with a third through opening 45, substantially aligned with the first and the second through openings 53, 54.

In accordance with the first and fourth embodiments respectively illustrated in figures 5 and 6A-6B, the fixing portion 51 is placed at least partially within the tubular sleeve 4, while the head portion 52 is placed outside the tubular sleeve 4 and the annular seat 6 is made on the first lateral surface 523 of the head portion 52.

In accordance with the aforesaid embodiments, the head portion 52 comprises a first abutment surface, preferably coinciding with the first wall 520, placed in abutment against the external face 441 of the closure wall 44 and the fixing portion 51 comprises a second abutment surface 510, placed in abutment against the internal face 440 of the closure wall 44.

Advantageously, the first retention element 55 is placed to traverse the first, second and third through openings 53, 54, 45 and retains the head portion 52 constrained to the fixing portion 51 with the closure wall 44 of the tubular sleeve 4 interposed.

In operation, the fixing portion 51 is inserted within the tubular sleeve 4 from its first open end 4', before the tubular sleeve 4 is fit on the handle 101 of the wheelbarrow 100.

Advantageously, in addition, with particular reference to the first embodiment illustrated in figure 5, the fixing portion 51 has substantially washer form and comprises a radial shoulder 511, which during use is susceptible of being interposed between a free end of the handle 101 of the wheelbarrow 100 and the internal face 440 of the closure wall 44 of the tubular sleeve 4, in order to improve the retention of the latter on the handle 101 of the wheelbarrow 100.

In accordance with the fourth embodiment illustrated in figures 6A and 6B, the fixing portion 51 is made at least of a deformable polymer material and comprises a second external lateral surface 512, directed towards the internal surface 411 of the tubular sleeve 4.

The fixing portion 51 is advantageously extended between a front face 51', placed substantially at the second free end 4" of the tubular sleeve 4, and a rear face 51", placed inside the tubular sleeve 4 and opposite the front face 51'.

Advantageously, the second retention element 56 of the coupling means 5 comprises a nut screw 56', mechanically connected to the first retention element 55 and placed in abutment against the rear face 51" of the fixing portion 51.

Therefore, following the screwing of the first retention element 55 on the nut screw 56', the latter exerts an axial compression force on the fixing portion 51 and radially deforms the second external lateral surface 512 of the fixing portion 51.

In order to block the nut screw 56' in rotation with respect to the fixing portion 51 in screw form and thus ensure that the nut screw 56' translates along the same retention element 55 when the latter is brought into rotation, the second retention element 56 preferably comprises retention teeth projecting from the same nut screw 56' and inserted in the deformable polymer material of the fixing portion 51 itself.

In this manner, the fixing portion 51, and consequently the head portion 52 fixed thereto, is retained in position on the handle 101 of the wheelbarrow 100 by the friction force generated by the deformation of the deformable polymer material in which the fixing portion 51 is attained.

In accordance with the second and third embodiments respectively illustrated in figures 3 and 4, the head portion 52 and the fixing portion 51 are placed outside the tubular sleeve 4.

Advantageously, the fixing portion 51 is mechanically connected outside the tubular sleeve 4, preferably at the annular shoulder 40 of the tubular sleeve 4.

For such purpose, the fixing portion 51 is advantageously provided with an at least partially annular cavity 513, counter-shaped with respect to the annular shoulder 40 of the tubular sleeve 4 and mechanically engaged with the latter.

Advantageously, in accordance with the aforesaid embodiments, the fixing portion 51 comprises a first and a second half-body 514, 515, each of which defining a portion of the annular cavity 513.

Advantageously, in accordance with the third embodiment of figure 4, the first half-body 514 is made in a single body with the head portion 52 of the coupling means 5.

Preferably, both half-bodies 514, 515 of the fixing portion are provided with second through openings 54, which are aligned with each other when the fixing portion 51 is connected to the tubular sleeve 4. In this manner, the first retention element 55 allows retaining the two half-bodies 514, 515 with the respective portions of annular cavities 513 engaged with the annular shoulder 40 of the tubular sleeve 4.

Otherwise, in accordance with the third embodiment of figure 4, the second through opening 54 is only made on the first half-body 514, and the second half-body 515 is pressure-retained interposed between the head portion 52 and the first half-body 514.

Advantageously, the two portions of the annular cavity 513 form a single continuous annular cavity, which encloses the annular shoulder 40 when the fixing portion 51 is connected to the tubular sleeve 4.

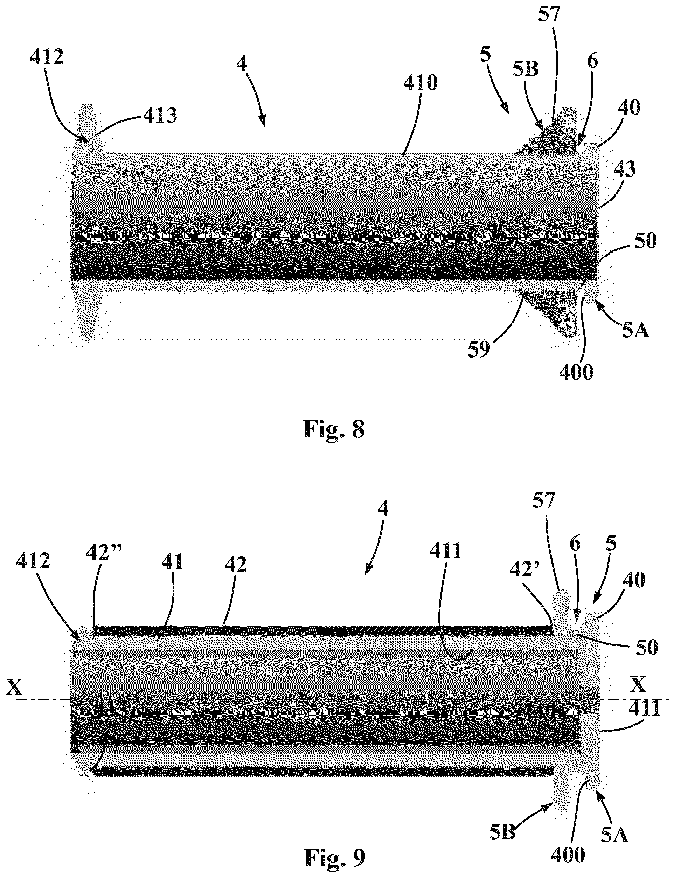

Advantageously, in accordance with the embodiments illustrated in figures 8 to 10, the coupling means 5 comprise at least one annular flange 57, which defines the annular seat 6 with the annular shoulder 40.

More in detail, the annular flange 57 defines (and in particular constitutes) the second coupling body 5B of the coupling means 5.

In accordance with the aforesaid embodiments, the annular flange 57 is extended radially projecting from the tubular sleeve 4, preferably from the external surface 410 of the first tubular body 41.

Advantageously, the annular flange 57 is placed spaced from the annular shoulder 40 and preferably is provided with a radial extension greater than the radial extension of the annular shoulder 40.

Advantageously therefore the annular flange 57 and the annular shoulder 40 between them define the annular seat 6 to which the transverse thrust element 3 is couplable.

Advantageously, the annular flange 57 and the tubular sleeve 4 are made in a single body, preferably of a polymer material.

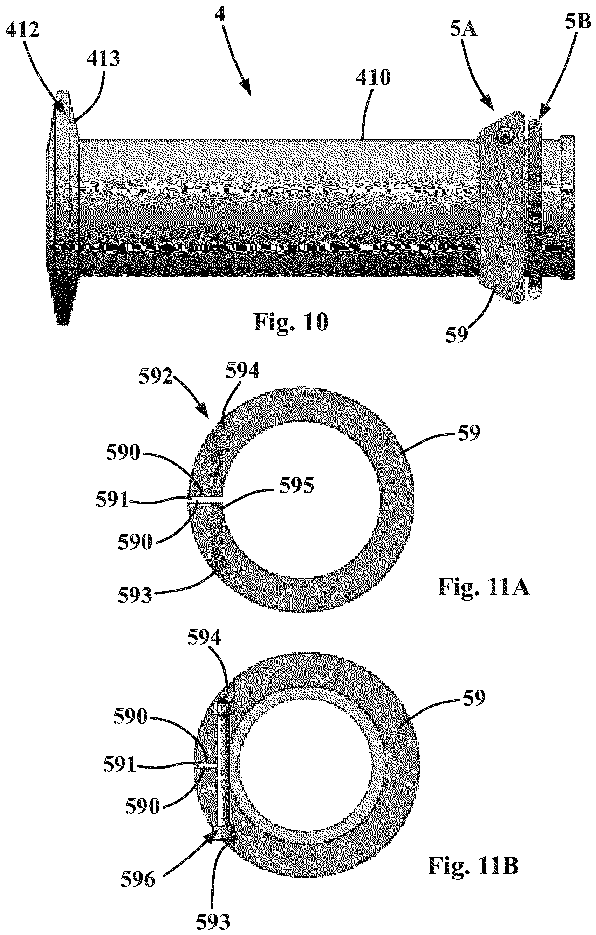

In accordance with the embodiments illustrated in figures 8 and 10, the annular flange 57 is fit on the tubular sleeve 4 and is mechanically connected outside the latter, preferably against the external surface 410 of the first tubular body 41. Preferably, as illustrated in figure 13, the annular flange 57 is made in a single body with the second tubular body 42 and is extended radially projecting from the latter. Advantageously, the annular flange 57 comprises an annular body 59, which is provided with a separation opening 591, which is extended along a radial direction of the annular body 59 and defines two separate edges 590 of the annular body 59.

In this manner, the annular body 59 can be opened or closed by approaching or separating the two edges 590. The annular body 59 also advantageously comprises a fourth through opening 592, preferably orthogonal to the separation opening 591 and extended astride the two edges 590 of the annular body 59.

The fourth through opening 592 is extended preferably between a first and a second widened seat 593, 594, opposite each other, and a narrow section 595, interposed between the two widened seats 593, 594.

The coupling means 5 also comprise a retention element 596, preferably comprising a screw and a retention nut, which is insertable in the fourth through opening 592 in order to selectively engage and disengage the two edges 590 of the annular body 59 with/from each other.

Preferably, the screw comprises a head, which is housed in the first widened seat 593, and a stem, placed to traverse the narrow section 595 up to at least partially engaging the second widened seat 594, in which the retention nut is placed.

Hence, in operation, the two edges 590 are separated in order to allow fitting the coupling means 5 on the tubular sleeve 4, and subsequently they are approached and engaged by the retention element 596, in order to retain the annular body 59 fit on and integral with the tubular sleeve 4.

Advantageously, the annular body 59 with shape tapered between a widened end, directed towards the second free end of the tubular sleeve, and a narrow end, directed towards the first open end of the tubular sleeve.

Preferably, the fourth through opening 592 is placed in proximity to the widened end.

In accordance with the seventh embodiment illustrated in figure 9, the coupling means 5 are made in a single body with the tubular sleeve 4 and projectingly extended from the external face 441 of the closure wall 44 of the tubular sleeve 4.

Advantageously, the head portion 52 is provided with a radial extension substantially equivalent to the radial size of the tubular sleeve 4.

Advantageously, in addition, the fixing portion 51 of the coupling means 5 is defined by the narrow connection portion 50, placed to connect between the closure wall 44 of the tubular sleeve 4 and the head portion 52 of the coupling means 5.

Therefore, the annular seat 6 is laterally defined by the head portion 52 and by the closure wall 44 of the tubular sleeve 4.

The present device 1 therefore attains the pre-established objects.

## Claims

1. Device (1) for moving a wheelbarrow (100) provided with two handles (101) grippable by the hands of a user, said device comprising:
- two grips (2), each mechanically connectable to a respective handle (101) of said wheelbarrow (100) and provided with a tubular sleeve (4) grippable by a user, intended to be fit on a corresponding handle (101) of said wheelbarrow (100) and is extended along a first extension direction (X), between a first open end (4'), susceptible of being fit on the handle (101) of said wheelbarrow (100), and a second free end (4"), opposite said first end (4');
- a transverse thrust element (3), extended between a first end (3') mechanically connected to one of said two grips (2), and a second end (3") mechanically connected to the other of said two grips (2);
- coupling means (5) for coupling the ends of said transverse thrust element (3) to said grips (2);
said device (1) being **characterized in that** said coupling means (5) comprise a first coupling body (5A) and a second coupling body (5B), which are extended radially projecting with respect to said first extension direction (X), are spaced from each other along said first extension direction (X) and between them delimit an annular seat (6) in which the corresponding end (3', 3") of said transverse thrust element (3) is coupled; wherein said coupling means (5) comprise a connection portion (50), which is extended along said first extension direction (X) from said first coupling body (5A) to said second coupling body (5B) and defines a bottom surface of said annular seat (6); wherein said first coupling body (5A) and said second coupling body (5B) are extended radially projecting with respect to said connection portion (50), which, therefore, has narrow width with respect to said two coupling bodies (5A, 5B).

2. Device (1) according to claim 1, **characterized in that** said first coupling body (5A) and said second coupling body (5B) are positioned at the second free end (4") of the tubular sleeve (4) of the corresponding said grip (2).

3. Device (1) according to claim 1 or 2, **characterized in that** said first coupling body and said second coupling body are rigidly connected to each other.

4. Device (1) according to any one of the preceding claims, **characterized in that** said annular seat (6) is perimetrically provided with a circumferential opening (60) which is directed radially outward with respect to said first extension direction (X).

5. Device (1) according to any one of the preceding claims, **characterized in that** each said end (3', 3") of said transverse thrust element (3) is at least partially wound around the connection portion (50) of the coupling means (5) of the corresponding said grip (2).

6. Device (1) according to any one of the preceding claims, **characterized in that** said coupling means (5) comprise:
- at least one fixing portion (51), mechanically connected to said tubular sleeve (4);
- a head portion (52), fixed to said fixing portion (51).

7. Device (1) according to claim 6, **characterized in that** said coupling means (5) comprise a first through opening (53), made on said head portion (52), and a second through opening (54), made on said fixing portion (51) and substantially aligned with said first through opening (54);
said coupling means (5) comprising at least one first retention element (55), placed to traverse said first and said second through opening (53, 54) in order to fix said head portion (52) to said fixing portion (51).

8. Device (1) according to claim 6 or 7, **characterized in that** said head portion (52) is placed outside said tubular sleeve (4) and comprises a first lateral surface (523);
said fixing portion (51) being placed at least partially within said tubular sleeve (4) and said annular seat (6) being made on the first lateral surface (523) of said head portion (52).

9. Device (1) according to claim 7, **characterized in that** said coupling means (5) comprise a second threaded retention element (56), placed as a mechanical connection between the fixing portion (51) and the first retention element (55) in order to retain said first retention element (55) and said fixing portion (51) fixed via screwing.

10. Device (1) according to claim 9, **characterized in that** said fixing portion (51) is made at least of a deformable polymer material, comprises a second external lateral surface (512), directed towards an internal surface (411) of said tubular sleeve (4) and is extended between a front face (51'), placed substantially at the second free end (4") of said tubular sleeve (4), and a rear face (51 "), opposite said front face (51');
said second retention element (56) comprising a nut screw, mechanically connected to said first retention element (55) and placed in abutment against the rear face (51") of said fixing portion (51), exerting an axial compression force on said fixing portion (51) in order to radially deform the external lateral surface (512) of said fixing portion (51).

11. Device (1) according to claim 10, **characterized in that** said head portion (52) comprises said first coupling body (5A), said second coupling body (5B) and said connection portion (50).

12. Device (1) according to any one of the preceding claims, **characterized in that** said tubular sleeve (4) is provided with an annular shoulder (40) which defines said first coupling body (5A) and is placed substantially at the second free end (4") of said tubular sleeve (4), and said coupling means (5) comprise at least one annular flange (57), which defines said second coupling body (5B) and delimits said annular seat (6) with said annular shoulder (40).

13. Device (1) according to claim 12, **characterized in that** the annular shoulder (40) and the annular flange (57) of said tubular sleeve (4) are integrally made in a single body and are extended radially projecting from an external surface (410) of a first tubular body (41) of said tubular sleeve (4).

14. Device (1) according to claim 12, **characterized in that** said annular flange (57) is fit on an external surface (410) of a first tubular body (41) of said tubular sleeve (4).

## Patentansprüche

1. Vorrichtung (1) zum Bewegen einer Schubkarre (100), die mit zwei Griffen (101) ausgestattet ist, die von einem Benutzer mit den Händen gefasst werden können, wobei die genannte Vorrichtung Folgendes umfasst:
- zwei Handgriffe (2), von denen jeder mechanisch mit einem entsprechenden Griff (101) der genannten Schubkarre (100) verbunden werden kann und mit einer Grifftülle (4) ausgestattet ist, die von einem Benutzer gefasst werden kann, die dazu bestimmt ist, auf einen entsprechenden Griff (101) der genannten Schubkarre (100) aufgezogen zu werden und entlang einer ersten Verlaufsrichtung (X), zwischen einem ersten geöffneten Ende (4'), das geeignet ist, auf den Griff (101) der genannten Schubkarre (100) aufgezogen zu werden, und einem dem genannten ersten Ende (4') gegenüberliegenden zweiten freien Ende (4") verläuft;
- ein quer liegendes Schubelement (3), das zwischen einem mechanisch mit einem der genannten beiden Handgriffe (2) verbundenen ersten Endstück (3') und einem mechanisch mit dem anderen der genannten beiden Handgriffe (2) verbundenen zweiten Endstück (3") verläuft;
- Kupplungselemente (5), um die Endstücke des genannten quer liegenden Schubelements (3) mit den genannten Handgriffen (2) zu kuppeln;
wobei die genannte Vorrichtung (1) **dadurch gekennzeichnet ist, dass** die genannten Kupplungselemente (5) einen ersten Kupplungskörper (5A) und einen zweiten Kupplungskörper (5B) umfassen, die im Verhältnis zu der genannten ersten Verlaufsrichtung (X) radial vorstehend verlaufen, sich entlang der genannten ersten Verlaufsrichtung (X) im Abstand zueinander befinden und zwischen einander einen ringförmigen Sitz (6) begrenzen, in dem das entsprechende Endstück (3', 3") des genannten quer liegenden Schubelements (3) gekuppelt ist;
wobei die Kupplungselemente (5) einen Verbindungsabschnitt (50) umfassen, der entlang der genannten ersten Verlaufsrichtung (X) von dem genannten ersten Kupplungskörper (5A) zu dem genannten zweiten Kupplungskörper (5B) verläuft und eine Abschlussfläche des genannten ringförmigen Sitzes (6) definiert;
wobei der genannte erste Kupplungskörper (5A) und der genannte zweite Kupplungskörper (5B) im Verhältnis zu dem genannten Verbindungsabschnitt (50) radial vorstehend verlaufen, der daher im Verhältnis zu den genannten beiden Kupplungskörpern (5A, 5B) eine schmalere Breite aufweist.

2. Vorrichtung (1) nach Anspruch 1, **dadurch gekennzeichnet, dass** der genannte erste Kupplungskörper (5A) und der genannte zweite Kupplungskörper (5B) an dem zweiten freien Ende (4") der Grifftülle (4) des entsprechenden Handgriffs (2) positioniert sind.

3. Vorrichtung (1) nach Anspruch 1 oder 2, **dadurch gekennzeichnet, dass** der genannte erste Kupplungskörper und der genannte zweite Kupplungskörper steif miteinander verbunden sind.

4. Vorrichtung (1) nach einem beliebigen der vorangegangenen Ansprüche, **dadurch gekennzeichnet, dass** der genannte ringförmige Sitz (6) auf seinem Umfang mit einer umlaufenden Öffnung (60) ausgestattet ist, die im Verhältnis zu der genannten ersten Verlaufsrichtung (X) radial nach außen gerichtet ist.

5. Vorrichtung (1) nach einem beliebigen der vorangegangenen Ansprüche, **dadurch gekennzeichnet, dass** jedes genannte Endstück (3', 3") des genannten quer liegenden Schubelements (3) mindestens teilweise um den Verbindungsabschnitt (50) der Kupplungselemente (5) des entsprechenden Handgriffs (2) gewickelt ist.

6. Vorrichtung (1) nach einem beliebigen der vorangegangenen Ansprüche, **dadurch gekennzeichnet, dass** die genannten Kupplungselemente (5) Folgendes umfassen:
- mindestens einen Befestigungsabschnitt (51), der mechanisch mit der genannten Grifftülle (4) verbunden ist;
- einen Kopfabschnitt (52), der an dem genannten Befestigungsabschnitt (51) befestigt ist.

7. Vorrichtung (1) nach Anspruch 6, **dadurch gekennzeichnet, dass** die genannten Kupplungselemente (5) eine erste durchgehende Öffnung (53) umfassen, die auf dem genannten Kopfabschnitt (52) angebracht ist, und eine zweite durchgehende Öffnung (54), die auf dem genannten Befestigungsabschnitt (51) angebracht und im Wesentlichen mit der ersten durchgehenden Öffnung (54) ausgerichtet ist;
wobei die genannten Kupplungselemente (5) mindestens ein erstes Rückhalteelement (55) umfassen, das die genannte erste und die genannte zweite durchgehende Öffnung (53, 54) überquerend positioniert ist, um den genannten Kopfabschnitt (52) an dem genannten Befestigungsabschnitt (51) zu befestigen.

8. Vorrichtung (1) nach Anspruch 6 oder 7, **dadurch gekennzeichnet, dass** der genannte Kopfabschnitt (52) außen an der genannten Grifftülle (4) positioniert ist und eine erste Seitenfläche (523) umfasst;
wobei der genannte Befestigungsabschnitt (51) mindestens teilweise im Inneren der genannten Grifftülle (4) positioniert ist und der genannte ringförmige Sitz (6) an der ersten Seitenfläche (523) des genannten Kopfabschnitts (52) eingerichtet ist.

9. Vorrichtung (1) nach Anspruch 7, **dadurch gekennzeichnet, dass** die genannten Kupplungselemente (5) ein zweites Rückhalteelement (56) mit Gewinde umfassen, das als mechanische Verbindung zwischen dem Befestigungsabschnitt (51) und dem ersten Rückhalteelement (55) positioniert ist, um das genannte erste Rückhalteelement (55) und den genannten Befestigungsabschnitt (51) durch Verschraubung befestigt zu halten.

10. Vorrichtung (1) nach Anspruch 9, **dadurch gekennzeichnet, dass** der genannte Befestigungsabschnitt (51) mindestens aus verformbarem Polymerwerkstoff hergestellt ist, eine äußere zweite Seitenfläche (512) umfasst, die zu einer Innenfläche (411) der genannten Grifftülle (4) gerichtet ist und zwischen einer Vorderseite (51'), die im Wesentlichen an dem zweiten freien Ende (4") der genannten Grifftülle (4) positioniert ist, und einer Rückseite (51"), die der genannten Vorderseite (51') entgegengesetzt ist, verläuft;
wobei das genannte Rückhalteelement (56) eine Schraubenmutter umfasst, die mechanisch mit dem genannten ersten Rückhalteelement (55) verbunden und gegen die Rückseite (51") des genannten Befestigungsabschnitts (51) anschlagend positioniert ist und eine axiale Kompressionskraft auf den genannten Befestigungsabschnitt (51) ausübt, um die äußere Seitenfläche (512) des genannten Befestigungsabschnitts (51) radial zu verformen.

11. Vorrichtung (1) nach Anspruch 10, **dadurch gekennzeichnet, dass** der genannte Kopfabschnitt (52) den genannten ersten Kupplungskörper (5A), den genannten zweiten Kupplungskörper (5B) und den genannten Verbindungsabschnitt (50) umfasst.

12. Vorrichtung (1) nach einem beliebigen der vorangegangenen Ansprüche, **dadurch gekennzeichnet, dass** die genannte Grifftülle (4) mit einem ringförmigen Ansatz (40) versehen ist, der den genannten ersten Kupplungskörper (5A) definiert und im Wesentlichen an dem zweiten freien Ende (4") der genannten Grifftülle (4) positioniert ist, und die genannten Kupplungselemente (5) mindestens einen ringförmigen Flansch (57) umfassen, der den genannten zweiten Kupplungskörper (5B) definiert und mit dem genannten ringförmigen Ansatz (40) den genannten ringförmigen Sitz (6) definiert.

13. Vorrichtung (1) nach Anspruch 12, **dadurch gekennzeichnet, dass** der ringförmige Ansatz (40) und der ringförmige Flansch (57) der genannten Grifftülle (4) aus einem Stück hergestellt sind und von einer Außenfläche (410) eines ersten rohrförmigen Körpers (41) der genannten Grifftülle (4) aus radial vorstehend verlaufen.

14. Vorrichtung (1) nach Anspruch 12, **dadurch gekennzeichnet, dass** der genannte ringförmige Flansch (57) auf eine Außenfläche (410) eines ersten ringförmigen Körpers (41) der genannten Grifftülle (4) aufgezogen ist.

## Revendications

1. Dispositif (1) de déplacement d'une brouette (100) munie de deux manches (101) pouvant être tenus par les mains d'un utilisateur, ledit dispositif comprenant :
- deux poignées (2), chacune pouvant être reliée mécaniquement à un manche (101) respectif de ladite brouette (100) et munie d'un manchon tubulaire (4) pouvant être tenu par un utilisateur, destiné à revêtir un manche (101) correspondant de ladite brouette (100) et qui s'étend le long d'une première direction de développement (X), entre une première extrémité ouverte (4'), susceptible de revêtir le manche (101) de ladite brouette (100), et une deuxième extrémité libre (4"), opposée à ladite première extrémité (4') ;
- un élément de poussée transversale (3), s'étendant entre un premier embout (3') relié mécaniquement à l'une desdites deux poignées (2), et un deuxième embout (3") relié mécaniquement à l'autre desdites deux poignées (2) ;
- des moyens d'attelage (5) pour attacher les embouts dudit élément de poussée transversale (3) auxdites poignées (2) ;
ledit dispositif (1) étant **caractérisé en ce que** lesdits moyens d'attelage (5) comprennent un premier corps d'attelage (5A) et un deuxième corps d'attelage (5B), qui s'étendent radialement en saillie par rapport à ladite première direction de développement (X), sont espacés l'un de l'autre le long de ladite première direction de développement (X) et délimitent entre eux un siège annulaire (6) dans lequel l'embout (3', 3") correspondant dudit élément de poussée transversale (3) est attaché ;
dans lequel lesdits moyens d'attelage (5) comprennent une portion de connexion (50) qui se développe le long de ladite direction de développement (X) dudit premier corps d'attelage (5A) audit deuxième corps d'attelage (5B) et définit une surface de fond dudit siège annulaire (6) ;
dans lequel ledit premier corps d'attelage (5A) et ledit deuxième corps d'attelage (5B) s'étendent radialement en saillie par rapport à ladite portion de connexion (50), qui a donc une largeur étroite par rapport auxdits deux corps d'attelage (5A, 5B).

2. Dispositif (1) selon la revendication 1, **caractérisé en ce que** ledit premier corps d'attelage (5A) et ledit deuxième corps d'attelage (5B) sont positionnés au niveau de la deuxième extrémité libre (4") du manchon tubulaire (4) de ladite poignée (2) correspondante.

3. Dispositif (1) selon la revendication 1 ou 2, **caractérisé en ce que** ledit premier corps d'attelage et ledit deuxième corps d'attelage sont reliés solidement l'un à l'autre.

4. Dispositif (1) selon l'une quelconque des revendications précédentes, **caractérisé en ce que** ledit siège annulaire (6) est muni sur le pourtour d'une ouverture circonférentielle (60) qui est orientée radialement vers l'extérieur par rapport à ladite première direction de développement (X).

5. Dispositif (1) selon l'une quelconque des revendications précédentes, **caractérisé en ce que** chaque embout (3', 3") dudit élément de poussée transversale (3) est au moins partiellement enroulé autour de la portion de connexion (50) des moyens d'attelage (5) de ladite poignée (2) correspondante.

6. Dispositif (1) selon l'une quelconque des revendications précédentes, **caractérisé en ce que** lesdits moyens d'attelage (5) comprennent :
- au moins une portion de fixation (51), reliée mécaniquement audit manchon tubulaire (4) ;
- une portion de tête (52), fixée à ladite portion de fixation (51).

7. Dispositif (1) selon la revendication 6, **caractérisé en ce que** lesdits moyens d'attelage (5) comprennent une première ouverture traversante (53), réalisée sur ladite portion de tête (52), et une deuxième ouverture traversante (54), réalisée sur ladite portion de fixation (51) et sensiblement alignée avec ladite première ouverture traversante (54) ; lesdits moyens d'attelage (5) comprenant au moins un premier élément de retenue (55), placé pour traverser ladite première et ladite deuxième ouverture traversante (53, 54) afin de fixer ladite portion de tête (52) à ladite portion de fixation (51).

8. Dispositif (1) selon la revendication 6 ou 7, **caractérisé en ce que** ladite portion de tête (52) est placée à l'extérieur dudit manchon tubulaire (4) et comprend une première surface latérale (523) ;
ladite portion de fixation (51) étant placée au moins partiellement à l'intérieur dudit manchon tubulaire (4) et ledit siège annulaire (6) étant obtenu sur la première surface latérale (523) de ladite portion de tête (52).

9. Dispositif (1) selon la revendication 7, **caractérisé en ce que** lesdits moyens d'attelage (5) comprennent un deuxième élément de retenue (56) fileté, placé en connexion mécanique entre la portion de fixation (51) et le premier élément de retenue (55) pour retenir ledit premier élément de retenue (55) fixé et ladite portion de fixation (51) par vissage.

10. Dispositif (1) selon la revendication 9, **caractérisé en ce que** ladite portion de fixation (51) est constituée au moins d'un matériau polymère déformable, comprend une deuxième surface latérale extérieure (512), orientée vers une surface intérieure (411) dudit manchon tubulaire (4) et s'étend entre une face avant (51'), placée sensiblement au niveau de la deuxième extrémité libre (4") dudit manchon tubulaire (4), et une face arrière (51"), opposée à ladite face avant (51');
ledit deuxième élément de retenue (56) comprenant une vis femelle, reliée mécaniquement audit premier élément de retenue (55) et placée en butée contre la face arrière (51") de ladite portion de fixation (51) en exerçant une force de compression axiale sur ladite portion de fixation (51) pour déformer radialement la surface latérale extérieure (512) de ladite portion de fixation (51).

11. Dispositif (1) selon la revendication 10, **caractérisé en ce que** ladite portion de tête (52) comprend ledit premier corps d'attelage (5A), ledit deuxième corps d'attelage (5B) et ladite portion de connexion (50).

12. Dispositif (1) selon l'une quelconque des revendications précédentes, **caractérisé en ce que** ledit manchon tubulaire (4) est muni d'un épaulement annulaire (40) qui définit ledit premier corps d'attelage (5A) et est placé sensiblement au niveau de la deuxième extrémité libre (4") dudit manchon tubulaire (4), et lesdits moyens d'attelage (5) comprennent au moins une bride annulaire (57), qui définit ledit deuxième corps d'attelage (5B) et délimite avec ledit épaulement annulaire (40) ledit siège annulaire (6).

13. Dispositif (1) selon la revendication 12, **caractérisé en ce que** l'épaulement annulaire (40) et la bride annulaire (57) dudit manchon tubulaire (4) sont réalisés en un corps unique et se développent en saillie radialement à partir d'une surface extérieure (410) d'un premier corps tubulaire (41) dudit manchon tubulaire (4).

14. Dispositif (1) selon la revendication 12, **caractérisé en ce que** ladite bride annulaire (57) revêt une surface extérieure (410) d'un premier corps tubulaire (41) dudit manchon tubulaire (4).
